# EUROPÄISCHE PATENTSCHRIFT

(11) **EP 3 739 023 B1**
(45) Veröffentlichungstag und Bekanntmachung des Hinweises auf die Patenterteilung: **06.12.2023**
(21) Anmeldenummer: 20165170.0
(22) Anmeldetag: 24.03.2020
(51) Int. Cl.: C10L 3/08, C10L 5/44

(54) **VERFAHREN ZUM HERSTELLEN VON FESTBRENNSTOFF AUS BIOMASSE**
METHOD FOR THE MANUFACTURE OF SOLID FUEL FROM BIOMASS
PROCÉDÉ DE FABRICATION DE COMBUSTIBLE SOLIDE À PARTIR DE BIOMASSE

(30) Priorität: 14.05.2019 DE 102019112561
(43) Veröffentlichungstag der Anmeldung: 18.11.2020
(73) Patentinhaber: getproject GmbH & Co. KG, 24103 Kiel (DE)
(72) Erfinder: Götz, Johann, 24105 Kiel (DE)
(74) Vertreter: Lobemeier, Martin Landolf

(56) Entgegenhaltungen:
- EP-A1- 3 400 775
- EP-B1- 2 841 385
- DE-A1- 19 909 328

## Beschreibung

Die Erfindung betrifft ein Verfahren zum Herstellen von Festbrennstoff aus Biomasse. Insbesondere betrifft die Erfindung ein Verfahren zum Herstellen normgerechter Brennstoffe aus halmgutartiger Biomasse oder Grünschnitt für den Einsatz in überwachungspflichtigen Feuerungsanlagen.

In Deutschland werden ambitionierte energie- und klimapolitische Ziele verfolgt, die bis in das Jahr 2050 reichen. Im Vergleich zu 1990 wird eine Reduktion der Treibhausgasemissionen durch den Einsatz von erneuerbaren Energien um 80 % bis 95 % angestrebt, bei gleichzeitiger Reduktion des Bruttoendenergieverbrauch um 60 % sowie dem Primärenergieverbrauch um 50 %. In der Zeit von 1990 bis 2017 ist der Anteil der erneuerbaren Energien im Wärmebereich von 1 % auf 13,9 % angestiegen. Im Strombereich lag der Anteil an erneuerbaren Energien in 2017 schon bei 36 %. Für das Erreichen der energie- und klimapolitischen Ziele wird daher die Nutzung aller verfügbaren regenerativen Ressourcen unerlässlich sein.

Der zurzeit wichtigste Bioenergieträger für den Wärmemarkt in Deutschland ist mit Abstand das Holz. Der inländische Verbrauch von Holz als Brennstoff hat in den vergangenen zwei Jahrzehnten kontinuierlich zugenommen. Im Wärmebereich ist der Anteil der erneuerbaren Energie in diesem Zeitraum von 2,1 % auf 13,9 % gestiegen. Holz hat daran einen erheblichen Anteil. Limitiert ist der Verbrauch durch den begrenzten Zuwachs und durch Nutzungskonflikte zwischen der energetischen und der stofflichen Nutzung.

Ein wichtiger Lieferant von Biomasse für die energetische Nutzung ist neben der Forstwirtschaft die Landwirtschaft. Im Vordergrund stehen dabei der Rapsanbau zur Biodieselproduktion, die Bereitstellung von Substraten für die Biogaserzeugung, der Anbau von stärke- und zuckerhaltigen Pflanzen für die Herstellung von Bioethanol als Treibstoff, sowie der Anbau von Miscanthus und schnellwachsendem Holz als Brennstoff.

Eine bislang eher wenig genutzte Ressource sind Reststoffe und Abfälle biogenen Ursprungs, beispielsweise Grünschnitt aus der Pflege von Parks und Gärten, Landschaftspflegematerial, Straßenbegleitgrün etc. Deren energetische Nutzung ist - sofern die relevanten Voraussetzungen eingehalten werden - nicht mit gravierenden ökologischen und sozioökonomischen Risiken verbunden.

Problematisch bei der Verbrennung von Brennstoffen aus halmgutartiger Biomasse sind jedoch unzulässige Emissionen und unerwünschte Bildung von Schlacke. Die Eigenschaften von Brennstoff aus halmartiger Biomasse sind in DIN EN ISO 17225 Teil 1 für Feuerungsanlagen nach Erster Verordnung zur Durchführung des Bundesimmissionsschutzgesetz 6. BImSchV und in TA-Luft geregelt. Die Grenzwerte für verbrennungsrelevante Inhaltsstoff sind in Tabelle 1 der Norm festgelegt.

Zwar sind beispielsweise aus der EP 1 443 096 B1 und der EP 1 587 899 B1 Verfahren zur Herstellung Brennstoff aus biogenen Rest- und Abfallstoffen bekannt. Sie sind jedoch nicht direkt für die Herstellung von Brennstoffen für Feuerungsanlagen nach der 1. BImSchV geeignet. Weitere Verfahren zum Herstellen von Festbrennstoff aus Biomasse sind aus der EP 2 841 385 B1, der EP 3 400 775 A1 und der DE 199 09 328 A1 bekannt.

Aufgabe der vorliegenden Erfindung ist es daher, ein Verfahren zum Herstellen von Festbrennstoff aus Biomasse zu schaffen, die die verbrennungs- und umweltrelevanten Vorgaben nach der 1. BImSchV erfüllt.

Diese Aufgabe wird erfindungsgemäß durch das Verfahren mit den Merkmalen von Anspruch 1 gelöst. Die Unteransprüche geben vorteilhafte Ausgestaltungen der Erfindung wieder.

Grundgedanke der Erfindung ist es, den Einfluss der Pflanzeninhaltsstoffe hinsichtlich unzulässiger Emissionen bei der Verbrennung des Festbrennstoffs zu minimieren, ohne im Wesentlichen den Brennwert bzw. Heizwert des Festbrennstoffs zu beeinträchtigen.

Erfindungsgemäß wird also ein Verfahren zum Herstellen von Festbrennstoff aus Biomasse bereitgestellt, das die Nutzung des Brennstoffs gemäß DIN EN ISO 17225 Teil 1 Tabelle 1 für Feuerungsanlagen nach Erster Verordnung zur Durchführung des Bundesimmissionsschutzgesetz 1. BImSchV und nach TA-Luft erlaubt.

Das erfindungsgemäße Verfahren zum Herstellen von Festbrennstoff aus Biomasse weist die folgenden Schritte auf:
a) Zuführen von zerkleinerter Biomasse zu einem ersten Wasserbad zum Auswaschen wasserlöslicher Pflanzeninhaltsstoffe und zum Abscheiden von mit der Biomasse in das Wasserbad eingebrachtem Sand mittels Sedimentation (Schritt 30),
b) Überführen der von Sand und wasserlöslichen Pflanzeninhaltsstoffen entreicherten Biomasse in ein zweites Wasserbad (Schritt 50),
c) Entwässern der Biomasse unter Erhalt eines wasserlösliche und wasserunlösliche Pflanzeninhaltsstoffe enthaltenden Presssafts und eines um den Presssaft entreicherten Presskuchens (Schritt 80), und
d) Trocknen und Formpressen des Presskuchens zu Festbrennstoff (Schritt 90), wobei die in Schritt a) von Sand und wasserlöslichen Pflanzeninhaltsstoffen entreicherte Biomasse vor Schritt b) auf einen Feuchtigkeitsgehalt von 50 % bis 70 % entwässert wird, die in Schritt b) überführte Biomasse vor Schritt c) aus dem zweiten Wasserbad entnommen, entwässert und mit einer Spülflüssigkeit gespült wird, die nach dem Spülen anfallende Spülflüssigkeit mit den darin enthaltenen wasserlöslichen Pflanzeninhaltsstoffen im Gegenstrom zur Biomasse durch das zweite Wasserbad in das erste Wasserbad zurückgeführt, dort entnommen und durch Gärung und Verstromung des so gewonnenen Biogases energetisch verwertet wird und der in Schritt c) erhaltene Presssaft im Gegenstrom zur Biomasse durch das zweite Wasserbad in das erste Wasserbad zurückgeführt, dort entnommen und durch Gärung und Verstromung des so gewonnenen Biogases energetisch verwertet wird.

Es ist bevorzugt dadurch ausgestaltet, dass die beim Entwässern zwischen Schritt a) und Schritt b) anfallende Flüssigkeit zum ersten Wasserbad zurückgeführt wird. Die im Sandabscheider nicht sedimentierten mineralischen Feinanteile werden zuvor höchst bevorzugt mit einem Abscheider abgetrennt werden.

Durch die bevorzugte Temperierung des zweiten Wasserbades wird ein intensives Auswaschen von wasserlöslichen Pflanzeninhaltsstoffen erzielt. Die für das Temperieren benötigte Wärme stammt bevorzugt aus der Vergärung und Verstromung des Presssafts (siehe unten).

Weiter ist bevorzugt vorgesehen, dass die Spülflüssigkeit Frischwasser ist.

Nach dem Ausspülen von pflanzeninhaltsstoffhaltigen Flüssigkeit nach Schritt b) wird die Biomasse in Schritt c) mit der Presseinrichtung mechanisch entwässert, vorzugsweise auf einen Wassergehalt kleiner 50 %. Dabei werden auch nichtlösliche Pflanzeninhaltsstoffe ausgespült. Für die Entwässerung der Biomasse wird vorzugsweise eine Walzenpresse mit einem geringen Energiebedarf eingesetzt.

Die Spülflüssigkeit und der Presssaft werden zunächst dem zweiten und dann dem ersten als Wäscher verwendeten Wasserbad zugeführt. Die niedrige Konzentration der Flüssigkeit an Pflanzeninhaltsstoffen führt in beiden Wasserbädern durch Verdünnung zur Verbesserung des Auswaschens von Pflanzeninhaltsstoffen aus der Biomasse. Aus dem Wasserbad des Wäschers wird eine der zugeführten Menge entsprechende Menge an Flüssigkeit entnommen. Diese wird der Vergärung zur Gewinnung von Biogas zugeführt für eine energetische Verwertung durch Vergärung und Verstromung. Die gewonnene Energie wird bevorzugt wenigstens teilweise für den Betrieb der Anlage eingesetzt.

Bei der verarbeiteten Biomasse handelt es sich insbesondere um Landschaftspflegematerial, Grünschnitt aus der Pflege von Parks und Gärten, Straßenbegleitgrün und/oder Treibsel. Die zu verarbeitende Biomassen weisen durch Art und Herkunft vorbestimmte Eigenschaften auf. Diese können gemäß den Verfahrensschritten a) bis d) voneinander getrennt oder gemeinsam verarbeitet werden. Speziell kann die Biomasse in einem vorbestimmten Mischungsverhältnis in den Verfahrensschritten a) bis d) gemeinsam verarbeitet werden.

Vorzugsweise soll die Biomasse in zerkleinerter Form angeliefert werden. Ist das nicht der Fall, wird sie in Verfahrensschritt vor der Verarbeitung zerkleinert. Die Zerkleinerung erfolgt bevorzugt mit einem Scheiben- oder Trommelhäcksler. Dabei wird bevorzugt auf eine Häcksellänge von maximal 4 cm zerkleinert. Abhängig von Art und Eigenschaften der Biomasse kann die Häcksellänge variieren.

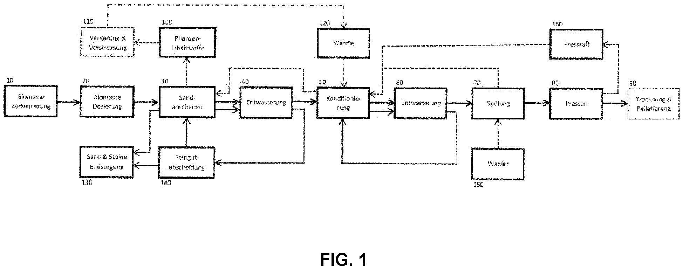

Die Erfindung wird im Folgenden anhand eines in der einzigen Fig. 1 dargestellten besonders bevorzugt ausgestalteten Ausführungsbeispiels erläutert. Dabei zeigt Fig. 1 ein schematisches Ablaufdiagramm. Mit Ausnahme der Verfahrensschritte gemäß Anspruch 1 sind die weiteren Verfahrensschritte als fakultativ und - sofern nicht ein Verfahrensschritt obligatorisch auf einem vorangehenden Verfahrensschritt aufbaut - als jeweils singuläre Maßnahme anzusehen, die zwar das Verfahren insgesamt verbessert, aber nicht zwingend eine Kombination aller in Fig. 1 dargestellten und im Folgenden erläuterten Verfahrensschritte voraussetzt.

Wesentlich hierbei ist eine Dreiteilung des Verfahrens, wonach zunächst in einem Wasserbad wasserlösliche Pflanzeninhaltsstoffe aus der Biomasse ausgewaschen und Sand und Steine durch Sedimentation abgeschieden werden, in einem zweiten Schritt in einem temperierten Wasserbad der Wassergehalt der Biomasse erhöht und der Gehalt an wasserlöslichen Pflanzeninhaltsstoffen weiter reduziert wird und in einem dritten Schritt durch einen mittels eine mechanische Entwässerung erzeugten Wasserfluss Pflanzeninhaltsstoffe aus der Biomasse ausgespült werden.

Dieses Vorgehen ermöglicht erst das Einhalten bzw. Unterschreiten der obenstehend geforderten Emissionsgrenzwerte durch Beseitigen von mineralischen Feststoffen und Pflanzeninhaltstoffen.

Das erfindungsgemäße Verfahren weist den folgenden grundlegenden Ablauf auf:
a) Zuführen von zerkleinerter Biomasse zu einem ersten Wasserbad zum Auswaschen wasserlöslicher Pflanzeninhaltsstoffe und zum Abscheiden von mit der Biomasse in das Wasserbad eingebrachtem Sand mittels Sedimentation,
b) Überführen der von Sand und wasserlöslichen Pflanzeninhaltsstoffen entreicherten Biomasse in ein zweites Wasserbad zur intensivierten Auswaschung von Pflanzeninhaltsstoffen,
c) Entwässern der im zweiten Wasserbad an Pflanzeninhaltsstoffen abgereicherten Biomasse unter Erhalt eines wasserlösliche und wasserunlösliche Pflanzeninhaltsstoffe enthaltenden Presssafts und eines um den Presssaft entreicherten Presskuchens, und
d) Trocknung und Formpressen des Presskuchens zu Festbrennstoff,
   wobei die in Schritt a) von Sand und wasserlöslichen Pflanzeninhaltsstoffen entreicherte Biomasse vor Schritt b) auf einen Feuchtigkeitsgehalt von 50 % bis 70 % entwässert wird, die in Schritt b) überführte Biomasse vor Schritt c) aus dem zweiten Wasserbad entnommen, entwässert und mit einer Spülflüssigkeit gespült wird, die nach dem Spülen anfallende Spülflüssigkeit mit den darin enthaltenen wasserlöslichen Pflanzeninhaltsstoffen im Gegenstrom zur Biomasse durch das zweite Wasserbad in das erste Wasserbad zurückgeführt, dort entnommen und durch Gärung und Verstromung des so gewonnenen Biogases energetisch verwertet wird und der in Schritt c) erhaltene Presssaft im Gegenstrom durch das zweite Wasserbad in das erste Wasserbad zurückgeführt, dort entnommen und durch Gärung und Verstromung energetisch verwertet wird.

Vorzugsweise soll die Biomasse in zerkleinerter Form angeliefert werden. Ist das nicht der Fall, wird sie in Verfahrensschritt 10 zerkleinert. Die Zerkleinerung erfolgt bevorzugt mit einem Scheiben- oder Trommelhäcksler. Dabei wird bevorzugt auf eine Häcksellänge von maximal 4 cm zerkleinert. Abhängig von Art und Eigenschaften der Biomasse kann die Häcksellänge variieren.

Die zerkleinerte Biomasse wird in einer Dosiereinrichtung 20 bereitgestellt und dem als Sandabscheider ausgebildeten Wasserbad 30 mit definierter Leistung kontinuierlich zugeführt.

In dem ersten Wasserbad 30 werden wasserlösliche Pflanzeninhaltsstoffe aus der Biomasse ausgewaschen. Abhängig von Art und vom Standort der Pflanzen sowie der Art der Gewinnung sind die Biomassen mehr oder weniger mit Sand und Steinen verunreinigt. Dieses würde zu einem unzulässigen Aschegehalt der Brennstoffe und unerwünschten hohen Verschleiß an der Anlage führen. Es ist daher vorteilhaft, wenn zunächst Sand und Steine aus der Biomasse abgeschieden werden. Sie werden daher in dem ersten Wasserbad 30 von der Biomasse getrennt. Sand und Steine werden sachgerecht entsorgt. Nach der Wäsche zur Abscheidung von Pflanzeninhaltsstoffen und der Abtrennung von Sand und Steinen wir die Biomasse der Entwässerungseinrichtung 40 zugeführt. Der Wassergehalt der Biomasse kann nach Abscheidung von Sand und Steinen im Wasserbad bis zu 100 % betragen und wird.

Durch Auspressen der Flüssigkeit mittels der Entwässerungseinrichtung 40 wird der Wassergehalt der Biomasse vorzugsweise auf bis zu 70 % reduziert und damit an wasserlöslichen Pflanzeninhaltsstoffen.

In dem Abscheider 140 erfolgt eine Abscheidung nicht sedimentierter mineralischer Feinanteile aus der ausgepressten Flüssigkeit. Die Flüssigkeit wird danach dem Sandabscheider 30 wieder zugeführt. Hieraus ergibt sich ein Flüssigkeitskreislauf von Sandabscheider 30 über Entwässerung 40 und Abscheider 140 zurück zum Sandabscheider 30. Die aus der Flüssigkeit abgeschiedenen mineralischen Feinanteile werden bevorzugt zusammen mit den abgeschiedenen Steinen und dem Sand entsorgt.

Nach der Entwässerung 40 wird die Biomasse im Rahmen einer Konditionierung dem bevorzugt temperierten zweiten Wasserbad 50 zugeführt. Zielsetzung ist die Erhöhung des Wassergehaltes in den Pflanzen zur Verbesserung der Abscheidung von Pflanzeninhaltsstoffen im folgenden Verfahrensschritt. Bei der Konditionierung 50 werden ebenfalls wasserlösliche Pflanzeninhaltsstoffe aus der Biomasse ausgewaschen.

Anschließend wird die Biomasse in der Entwässerungseinrichtung 60 abgepresst, um den Gehalt an Pflanzeninhaltstoffen weiter zu reduzieren. Die Flüssigkeit wird dem Konditionierer wieder zugeführt. Hieraus ergibt sich ein zweiter Flüssigkeitskreislauf von Konditionierung 50 über Entwässerung 60 zur Konditionierung 50. Optional kann auch ein weiterer Abscheider für nicht sedimentierbare mineralische Feinanteile eingesetzt werden.

Daraufhin wird die mit Pflanzeninhaltsstoffen beladene Flüssigkeit in der Spülung 70 vorzugsweise mit Frischwasser aus der Biomasse entfernt. Das Spülwasser wird anschließend dem zweiten Wasserbad 50 zugeführt.

Im weiteren Verlauf wird die Biomasse mit der Presseinrichtung 80 mechanisch entwässert, vorzugsweise auf einen Wassergehalt von unter 50 %. Durch den in der Konditionierung 50 erhöhten Wassergehalt der Biomasse werden durch den so erzeugten erhöhten Wasserfluss vermehrt Pflanzeninhaltstoffe aus der Biomasse ausgeschwemmt. Für die Entwässerung der Biomasse wird vorzugsweise eine Walzenpresse mit einem geringen Energiebedarf eingesetzt.

Das Pressgut wird durch die Trocknung und das Formpressen 90 zu Brennstoff verarbeitet.

Die Spülflüssigkeit aus der Spülung 70 und der Presssaft 160 mit niedrigen Gehalten an Pflanzeninhaltsstoffen werden zunächst der Konditionierung 50 und danach dem Abscheider 30 zur Reduktion der Konzentration an Pflanzeninhaltsstoffen in den beiden Wasserbäder und damit der Verbesserung des Auswaschens von Pflanzeninhaltsstoffen aus der Biomasse zugeführt. Durch die Rückführung der Pflanzeninhaltsstoffe als Presssaft wird der dritte Kreislauf gebildet.

Aus dem Wäscher 30 der wird die Menge an Flüssigkeit entnommen, bei dem der Füllstand des Wasserbades konstant bleibt. Die entnommene Flüssigkeit wird der Biogasanlage 110 zur Produktion von Strom und Wärme zugeführt. Strom und Wärme werden im Rahmen des Eigenbedarfs bevorzugt für den Betrieb der Anlage genutzt.

Für die Herstellung von Festbrennstoff aus Biomasse werden vorzugsweise biogene Rest- und Abfallstoffe verarbeitet, beispielsweise Landschaftspflegematerial, Grünschnitt aus der Pflege von Parks und Gärten, Straßenbegleitgrün und/oder Treibsel

Da die zu verarbeitenden Biomassen in der Regel nur in den Vegetationsperioden verfügbar sind, ist es für eine kontinuierlich ganzjährige bzw. eine von den Vegetationsperioden unabhängige Produktion von Brennstoff notwendig die verfügbare Biomasse zu lagern und zu konservieren. Die Konservierung erfolgt durch die sich bei der unter Luftabschluss gelagerten Biomasse sich bildende Milchsäure. Sofern es die örtlichen Verhältnisse bei deren Ernte zulassen, gehäckselt angeliefert werden. Wenn dies nicht möglich ist, wird die Biomasse zu Ballen gepresst und in Folie eingewickelt.

Grünschnitt aus der Pflege von Parks und Gärten, Straßenbegleitgrün kann fortlaufend verarbeitet werden, sofern die angelieferte Menge die Anlagenkapazität nicht übersteigt. Für eine kurze Zeit können sie frei gelagert werden. Gegebenenfalls werden sie unter Luftabschluss gelagert werden. In der Regel werden diese Biomassen unzerkleinert angeliefert. Dann erfolgt die Zerkleinerung in Schritt 10.

Biomasse unterschiedlicher Art, Herkunft und Eigenschaft können getrennt voneinander oder gemeinsam verarbeitet werden. Dabei ist im Hinblick auf die Brennstoffqualität vorgesehen, Biomasse unterschiedlicher Herkunft, Art und Eigenschaft in einem vorbestimmten Mischungsverhältnis zu verarbeiten.

## Patentansprüche

1. Verfahren zum Herstellen von Festbrennstoff aus Biomasse, mit den Schritten:
a) Zuführen von zerkleinerter Biomasse zu einem ersten Wasserbad zum Auswaschen wasserlöslicher Pflanzeninhaltsstoffe und zum Abscheiden von mit der Biomasse in das Wasserbad eingebrachtem Sand mittels Sedimentation (Schritt 30),
b) Überführen der von Sand und wasserlöslichen Pflanzeninhaltsstoffen entreicherten Biomasse in ein zweites Wasserbad (Schritt 50),
c) Entwässern der Biomasse unter Erhalt eines wasserlösliche und wasserunlösliche Pflanzeninhaltsstoffe enthaltenden Presssafts und eines um den Presssaft entreicherten Presskuchens (Schritt 80), und
d) Trocknen und Formpressen des Presskuchens zu Festbrennstoff (Schritt 90), wobei
- die in Schritt a) von Sand und wasserlöslichen Pflanzeninhaltsstoffen entreicherte Biomasse vor Schritt b) auf einen Feuchtigkeitsgehalt von 50 % bis 70 % entwässert wird (Schritt 40),
- die in Schritt b) überführte Biomasse vor Schritt c) aus dem zweiten Wasserbad entnommen, entwässert (Schritt 60) und mit einer Spülflüssigkeit gespült wird (Schritt 70),
- die nach dem Spülen anfallende Spülflüssigkeit mit den darin enthaltenen wasserlöslichen Pflanzeninhaltsstoffen im Gegenstrom zur Biomasse durch das zweite Wasserbad in das erste Wasserbad zurückgeführt, dort entnommen und durch Gärung und Verstromung des so gewonnenen Biogases energetisch verwertet wird, und
- der in Schritt c) erhaltene Presssaft im Gegenstrom zur Biomasse durch das zweite Wasserbad in das erste Wasserbad zurückgeführt, dort entnommen und durch Gärung und Verstromung des so gewonnenen Biogases energetisch verwertet wird.

2. Verfahren nach Anspruch 1, **dadurch gekennzeichnet, dass** das zweite Wasserbad temperiert wird.

3. Verfahren nach Anspruch 1, **dadurch gekennzeichnet, dass** die Spülflüssigkeit Frischwasser ist.

4. Verfahren nach Anspruch 1, **dadurch gekennzeichnet, dass** die beim Entwässern anfallende Flüssigkeit in einem Abscheider von nicht abgeschiedenen mineralischen Feinanteilen befreit wird.

5. Verfahren nach einem der vorhergehenden Ansprüche, **dadurch gekennzeichnet, dass** die zerkleinerte Biomasse eine Länge von zwischen 3 und 5 cm aufweist.

6. Verfahren nach einem der vorhergehenden Ansprüche, **dadurch gekennzeichnet, dass** der aus Schritt c) resultierende Presskuchen einen Feuchtigkeitsgehalt von maximal 50 % aufweist.

7. Verfahren nach einem der vorhergehenden Ansprüche, **dadurch gekennzeichnet, dass** die aus der energetischen Verwertung des Presssafts gewonnene Energie dem Verfahren wenigstens teilweise zugeführt wird.

8. Verfahren nach einem der vorhergehenden Ansprüche, **dadurch gekennzeichnet, dass** es sich bei der zu verarbeitenden Biomasse insbesondere um Landschaftspflegematerial, Grünschnitt aus der Pflege von Parks und Gärten, Straßenbegleitgrün und/oder Treibsel handelt.

## Claims

1. A method for producing solid fuel from biomass, comprising the steps of:
a) feeding shredded biomass to a first water bath for washing out water-soluble plant compounds and for separating sand introduced with the biomass into the water bath by means of sedimentation (step 30),
b) transferring the biomass depleted of sand and water-soluble plant compounds to a second water bath (step 50),
c) dewatering the biomass to obtain an extract containing water-soluble and waterinsoluble plant compounds and a press cake de-riched by the extract (step 80), and
d) drying and compression moulding the press cake into solid fuel (step 90), wherein
- the biomass depleted of sand and water-soluble plant compounds in step a) is dehydrated to a moisture content of 50% to 70% before step b) (step 40),
- the biomass transferred in step b) is removed from the second water bath before step c), dewatered (step 60) and rinsed with a rinsing liquid (step 70),
- the rinsing liquid obtained after rinsing, with the water-soluble plant compounds contained therein, is returned in countercurrent to the biomass through the second water bath into the first water bath, is harvested there and is utilised energetically by fermentation and conversion of the biogas thus obtained into electricity, and
- the extract obtained in step c) is returned in countercurrent to the biomass through the second water bath into the first water bath, is harvested there and is utilised energetically by fermentation and conversion of the biogas thus obtained into electricity.

2. Method according to claim 1, **characterised in that** the second water bath is temperature-controlled.

3. Method according to claim 1, **characterised in that** the rinsing liquid is fresh water.

4. Method according to claim 1, **characterised in that** the liquid produced during dewatering is freed from non-separated mineral fines in a separator.

5. Method according to any one of the preceding claims, **characterized in that** the hackled biomass has a length of between 3 and 5 cm.

6. Method according to any one of the preceding claims, **characterized in that** the press cake resulting from step c) has a moisture content of at most 50%.

7. Method according to one of the preceding claims, **characterised in that** the energy obtained from the energetic utilisation of the extract is at least partially supplied to the method.

8. Method according to one of the preceding claims, **characterised in that** the biomass to be processed is in particular landscape maintenance material, green cuttings from the maintenance of parks and gardens, roadside greenery and/or driftwood.

## Revendications

1. Procédé de fabrication de combustible solide à partir de biomasse, comportant les étapes suivantes:
a) amenée de biomasse broyée à un premier bain d'eau pour le lavage de substances végétales solubles dans l'eau et pour la séparation de sable introduit dans le bain d'eau avec la biomasse au moyen d'une sédimentation (étape 30),
b) transfert de la biomasse appauvrie en sable et en substances végétales solubles dans l'eau dans un second bain d'eau (étape 50),
c) déshydratation de la biomasse avec obtention d'un jus pressé contenant des substances végétales solubles dans l'eau et insolubles dans l'eau et d'un gâteau pressé appauvri en jus pressé (étape 80), et
d) séchage et moulage par compression du gâteau pressé en combustible solide (étape 90),
dans lequel
- avant l'étape b), la biomasse appauvrie en sable et en substances végétales solubles dans l'eau à l'étape a) est déshydratée à une teneur en humidité allant de 50 % à 70 % (étape 40),
- avant l'étape c), la biomasse transférée à l'étape b) est prélevée du second bain d'eau, déshydratée (étape 60) et rincée avec un liquide de rinçage (étape 70),
- le liquide de rinçage produit après le rinçage est ramené avec les substances végétales solubles dans l'eau contenues dans celui-ci dans le premier bain d'eau à contre-courant de la biomasse au moyen du second bain d'eau, est prélevé dudit premier bain d'eau et est valorisé énergétiquement par fermentation et production d'électricité du biogaz ainsi obtenu, et
- le jus pressé obtenu à l'étape c) est ramené dans le premier bain d'eau à contre-courant de la biomasse au moyen du second bain d'eau, est prélevé dudit premier bain d'eau et est valorisé énergétiquement par fermentation et production d'électricité du biogaz ainsi obtenu.

2. Procédé selon la revendication 1, **caractérisé en ce que** le second bain d'eau est tempéré.

3. Procédé selon la revendication 1, **caractérisé en ce que** le liquide de rinçage est de l'eau fraîche.

4. Procédé selon la revendication 1, **caractérisé en ce que** le liquide produit lors de la déshydratation est débarrassé de fines minérales non séparées dans un séparateur.

5. Procédé selon l'une des revendications précédentes, **caractérisé en ce que** la biomasse broyée présente une longueur comprise entre 3 et 5 cm.

6. Procédé selon l'une des revendications précédentes, **caractérisé en ce que** le gâteau pressé résultant de l'étape c) présente une teneur en humidité de 50 % au maximum.

7. Procédé selon l'une des revendications précédentes, **caractérisé en ce que** l'énergie obtenue à partir de la valorisation énergétique du jus pressé est amenée au moins partiellement au procédé.

8. Procédé selon l'une des revendications précédentes, **caractérisé en ce que** la biomasse à traiter est en particulier du matériau d'entretien des paysages, de la verdure issue de l'entretien de parcs et de jardins, de la verdure en bordure de route et/ou de la végétation flottante.
